# EUROPEAN PATENT SPECIFICATION

(11) **EP 2 767 432 B1**
(45) Date of publication and mention of the grant of the patent: **20.01.2016**
(21) Application number: 14155667.0
(22) Date of filing: 19.02.2014
(51) Int. Cl.: B60N 2/07, B60N 2/08

(54) **Vehicle seat sliding apparatus**
Fahrzeugsitzschiebevorrichtung
Coulisse pour siège de véhicule

(30) Priority: 19.02.2013 JP 2013030098
(43) Date of publication of application: 20.08.2014
(73) Proprietor: AISIN SEIKI KABUSHIKI KAISHA, Kariya-shi, Aichi-ken 448-8650 (JP)
(72) Inventor: Hoshihara, Naoaki, Kariya-shi, Aichi-ken 448-8650 (JP); Chiba, Akihiro, Kariya-shi, Aichi-ken 448-8650 (JP)
(74) Representative: Intès, Didier Gérard André

(56) References cited:
- EP-A1- 2 418 118
- EP-A1- 2 614 984
- FR-A1- 2 842 767
- US-A1- 2009 218 843

## Description

### TECHNICAL FIELD

This disclosure relates to a vehicle seat sliding apparatus.

### BACKGROUND DISCUSSION

JP 2012-35777A (Patent Literature 1) discloses a vehicle seat sliding apparatus in the related art. As is shown in Fig. 9, each wall 124 of an arc shape in cross section (hereinafter, referred to as the arc cross-section wall 124) is in closest proximity to a vertical wall 112 at its center portion in a top-bottom direction. A lower part of the arc cross-section wall 124 and a corner portion connecting a bottom wall 111 and the vertical wall 112 define a relatively large space in between and a lower ball 131 is provided in this space in a rollable manner. Likewise, an upper part of the arc cross-section wall 124 and a corner portion connecting an upper wall 113 and the vertical wall 112 define a relatively large space in between and an upper ball 132 is provided in this space in a rollable manner. An upper rail 120 is supported on a lower rail 110 and allowed to slide in a longitudinal direction in such a manner that the lower balls 131 and the upper balls 132 roll between the upper rail 120 and the lower rail 110. According to Patent Literature 1, a clearance in the top-bottom direction between the upper rail 120 and a fastening bolt 102 (head portion) is secured by providing a mounting portion, that is, by making a center portion of the bottom wall 111 in the width direction relatively low via a pair of steps 111a. This configuration is adopted to overcome an inconvenience that when the lower ball 131 is disposed in the space defined between the lower part of the arc cross-section wall 124 and the corner portion connecting the bottom wall 111 and the vertical wall 112, an inclined wall 123 naturally comes so close to the bottom wall 111 that a clearance in the top-bottom direction cannot be secured between the upper rail 120 and the fastening bolt 102 (head portion). This configuration, however, increases a sectional shape of the lower rail 110 in the top-bottom direction, which consequently increases a sectional shape of the entire apparatus in the top-bottom direction. EP 2 614 984 discloses another vehicle seat sliding apparatus which comprises the features of the preamble of appended claim 1.

### SUMMARY

Thus, a need exists for a vehicle seat sliding apparatus capable of reducing a sectional shape of the entire apparatus in the top-bottom direction.

An aspect of this disclosure provides a vehicle seat sliding apparatus including: a first rail fixed to one of a vehicle floor and a seat and having a pair of first vertical wall portions aligned side by side in a width direction, a first connection wall portion connecting base ends of the first vertical wall portions, and a pair of flanges projecting from tip ends of the first vertical wall portions inwardly in the width direction in which the flanges face each other and further bending toward the base ends of the first vertical wall portions; a second rail fixed to the other one of the vehicle floor and the seat in a relatively movable manner with respect to the first rail and having a pair of second vertical wall portions aligned side by side in the width direction between the flanges, a second connection wall portion connecting base ends of the second vertical wall portions, a pair of outward extending wall portions overhanging outward apart from each other in the width direction from tip ends of the second vertical wall portions while coming closer to the first connection wall portion in a top-bottom direction, and a pair of extending wall portions extending in the top-bottom direction from tip ends of the outward extending wall portions so as to be surrounded by the first vertical wall portions and the flanges; a pair of balls interposed in a rollable manner between a pair of second ball guides provided to the outward extending wall portions in inner portions in the width direction and a pair of first ball guides provided to the first connection wall portion so as to protrude to come closer to the second vertical wall portions in the top-bottom direction and on inner sides than the second ball guides in the width direction; and an attaching portion disposed at a tip end of the first connection wall portion in a direction of a relative movement where the first ball guides are not formed and forming a seating surface for a fastening member that fixes the first rail to one of the vehicle floor and the seat.

According to this configuration, the first rail is fixed to the vehicle floor or the seat by the fastening member in the attaching portion of the first connection wall portion. On the other hand, the second rail is connected to the first rail in a relatively movable manner so that the balls roll between the first ball guides and the second ball guides. The second ball guides of the second rail are provided to the outward extending wall portions in the inner portions in the width direction. Hence, a clearance in the top-bottom direction between the second rail and the first connection wall portion increases toward the center in the width direction particularly at the position of the attaching portion in which the first ball guides are not formed. With the use of this increasing clearance in the top-bottom direction, the fastening member (for example, the head portion) can be disposed to the attaching portion without providing a seat extrusion in the first connection wall portion. It thus becomes possible to reduce a sectional shape of the first rail, and hence a sectional shape of the entire apparatus in the top-bottom direction.

In the vehicle seat sliding apparatus, it is preferable that the first rail includes a flat plate wall portion connecting, in the width direction, apex portions of the first ball guides that come in closest proximity to the second vertical wall portions in the top-bottom direction.

According to this configuration, a planar shape making the full use of a distance in the width direction between the first ball guides can be secured by the flat plate portion. It thus becomes possible to suitably secure an installation position at which an appropriate functional component or an attachment member thereof is installed to the first rail (first connection wall portion).

In the vehicle seat sliding apparatus, it is preferable that a plurality of locking claws are aligned side by side in the direction of the relative movement at tip ends of the flanges of the first rail, the second rail is provided with a pair of through-holes penetrating the second vertical wall portions in the width direction and penetrating the outward extending wall portions in the top-bottom direction, and the vehicle seat sliding apparatus further includes: a locking member connected to the second rail in a rotationally movable manner about an axial line extending in the width direction on an inner side of the second vertical wall portions in the width direction, formed in an insertable manner into the through-holes in the second vertical wall portions, having locking portions capable of locking at least a part of the locking claws in both side edge portions in the width direction, and selectively locking the relative movement of the first and second rails as the locking portions fit onto and come off the locking claws in association with a rotational movement in the top-bottom direction; and a biasing member rotating and biasing the locking member to a side where the relative movement is locked.

According to this configuration, a relative movement of the first and second rails is selectively locked as the locking portions fit onto and come off the locking claws in association with a rotational movement of the locking member in the top-bottom direction. A rotational movement of the locking member to a side where the locking of a relative movement is unlocked is limited to the extent that the locking member abuts on the outer ends of the through-holes in the width direction in the outward extending wall portions. In this case, because each outward extending wall portion overhangs outward in the width direction while coming closer to the first connection wall portion in the top-bottom direction, for example, even when the locking member cannot pass through the through-holes in the top-bottom direction, a rotationally movable range of the locking member can be gradually increased comparably by shifting the outer ends of the through-holes in the width direction outward in the width direction. It thus becomes possible to suppress deterioration of strength of the second rail caused by the through-holes while suitably securing the rotationally movable range of the locking member.

In the vehicle seat sliding apparatus, it is preferable that the outward extending wall portions are provided with a pair of flat portions making a region between outer ends in the width direction and the through-holes horizontally in the width direction in a forming range of the through-holes in the direction of the relative movement.

According to this configuration, in the forming range of the through-holes in the direction of the relative movement, the flat portion positions the outer ends of the through-holes in the width direction to be flush in the top-bottom direction with the outer ends of the outward extending wall portions in the width direction that come in closest proximity to the first connection wall portion in the top-bottom direction. Hence, the rotationally movable range of the locking member can be increased without having to unnecessarily shift the outer ends of the through-holes in the width direction outward in the width direction. It thus becomes possible to further suppress deterioration of strength of the second rail caused by the through-holes while suitably securing the rotationally movable range of the locking member.

In the vehicle seat sliding apparatus, it is preferable that the respective outer extending wall portions are provided with a gradually changing portion that gradually conforms different sectional shapes to each other at least on one side of the flat portion in the direction of the relative movement.

According to this configuration, different sectional shapes are gradually conformed to each other by the gradually changing portion on the corresponding side of the flat portion in the direction of the relative movement. It thus becomes possible to suppress the occurrence of excess large stress in the outward extending wall portions (second rail) in association with the formation of the flat portion.

This disclosure has an advantage that a sectional shape of the entire apparatus can be reduced further in the top-bottom direction.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a side view of a vehicle seat to which this disclosure is applied;
Fig. 2 is a front view of an embodiment disclosed here;
Fig. 3A is a plan view of the embodiment disclosed here and Fig. 3B is a cross-sectional view taken IIIB-IIIB line in Fig. 3A;
Fig. 4 is a perspective view of the embodiment disclosed here;
Fig. 5 is a vertical cross-sectional view of the embodiment disclosed here to describe an operation thereof;
Fig. 6A and Fig. 6B are cross-sectional views taken VIA-VIA line and VIB-VIB line in Fig. 5, respectively;
Fig. 7 is a lateral cross-sectional view of a modification of the embodiment disclosed here;
Fig. 8 is a plan view of a modification of the embodiment disclosed here; and

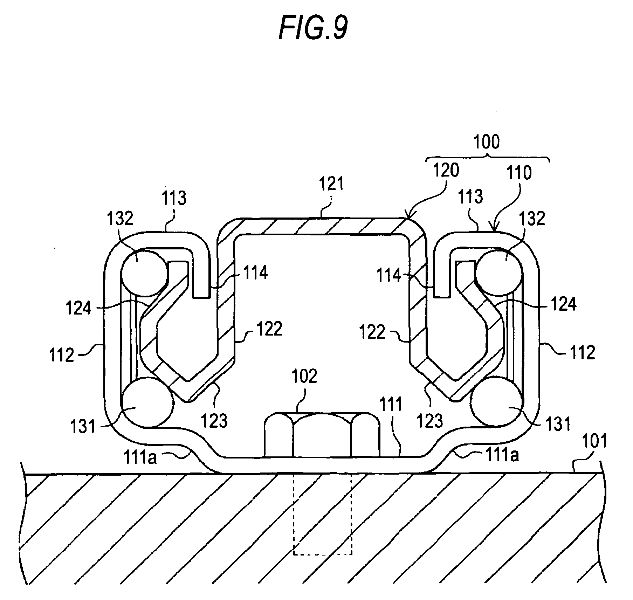

Fig. 9 is a lateral cross-sectional view of the related art.

### DETAILED DESCRIPTION

An embodiment of a vehicle seat sliding apparatus will be described. Hereinafter, a front-rear direction of a vehicle is referred to as the front-rear direction.

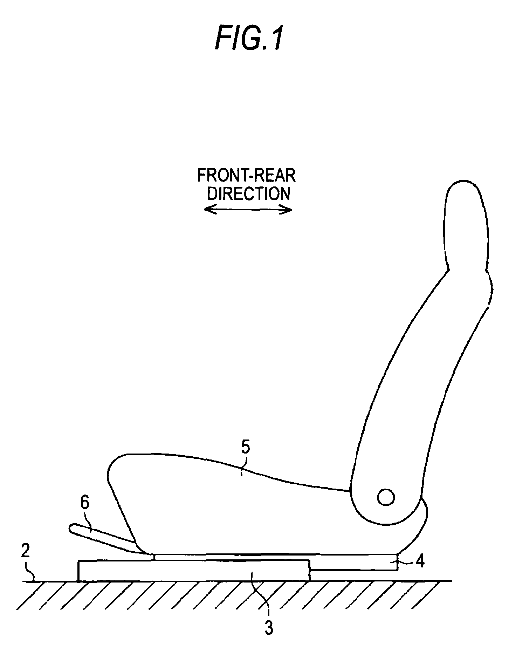

As is shown in Fig. 1, a lower rail 3 as a first rail is fixed to a vehicle floor 2 so as to extend in the front-rear direction and an upper rail 4 as a second rail is attached to the lower rail 3 in a relatively movable manner in the front-rear direction with respect to the lower rail 3. In other words, a longitudinal direction (relative movement direction) of the lower rail 3 and the upper rail 4 coincides with the front-rear direction in the embodiment.

It should be noted that each of the lower rail 3 and the upper rail 4 is disposed in pairs in a width direction (a direction perpendicular to the sheet surface of Fig. 1) and those disposed on the left facing the front are shown here. A seat 5 forming a passenger's seating portion is fixed to and supported on the upper rails 4. A relative movement of the lower rails 3 and the upper rails 4 is basically in a locked state and an unlocking handle 6 to unlock this locked state is provided.

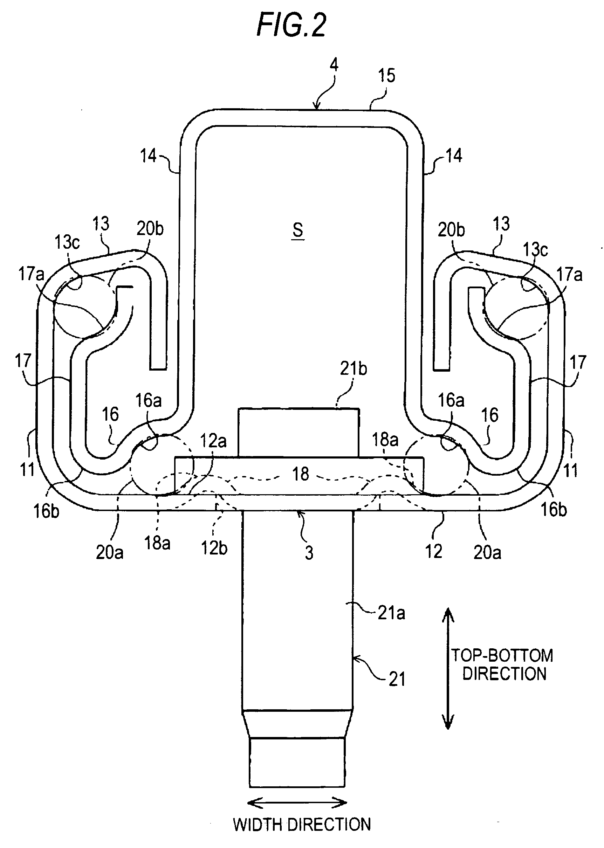

As is shown in Fig. 2, the lower rail 3 is formed of a plate material and has a pair of first vertical wall portions 11 extending in a top-bottom direction on the both sides in the width direction and a bottom wall portion 12 as a first connection wall portion connecting base ends (lower ends) of the first vertical wall portions 11. A pair of flanges 13 are formed continuously from tip ends (upper ends) of the first vertical wall portions 11 so as to project inwardly in the width direction in which the flanges 13 face each other and further bend toward the base ends of the first vertical wall portions 11.

A connection region of each flange 13 to the first vertical wall portion 11 forms a first upper ball guide 13c of substantially an arc shape in cross section that protrudes outward and diagonally upward. On the other hand, a pair of ridges 18 aligned side by side in the width direction are provided integrally with the bottom wall portion 12 so as to extend in the front-rear direction. The ridges 18 extend in the bottom wall portion 12 across an entire intermediate portion in the front-rear direction excluding the front end and the rear end. A region of each ridge 18 on the outer side than the apex in the width direction forms a first lower ball guide 18a as a first ball guide of substantially an arc shape in cross section that protrudes inward and diagonally downward.

The front end of the bottom wall portion 12 where the ridges 18 (first lower ball guides 18a) are not formed expands in a planar shape so that a position in the top-bottom direction is constant in the width direction and thereby forms an attaching portion 12a. The attaching portion 12a forms a seating surface for a fastening bolt 21 as a fastening member that fixes the lower rail 3 to the vehicle floor 2 and is provided with a substantially circular bolt insertion hole 12b penetrating a center portion in the top-bottom direction.

A bolt portion 21a of the fastening bolt 21, an axial line of which extends in the top-bottom direction, is inserted into the bolt insertion hole 12b. The fastening bolt 21 integrally has a flanged head portion 21 b protruding upward from the upper end of the bolt portion 21a. The lower rail 3 is fixed to the vehicle floor 2 by inserting the bolt portion 21a of the fastening bolt 21 into the bolt insertion hole 12b and tightening the fastening bolt 21 into a nut hole (not shown) in the vehicle floor 2 until the head portion 21 b of the fastening bolt 21 abuts on a peripheral portion of the bolt insertion hole 12b.

The same applies to the rear end of the bottom wall portion 12 where the ridges 18 (first lower ball guides 18a) are not formed (the illustration is omitted here).

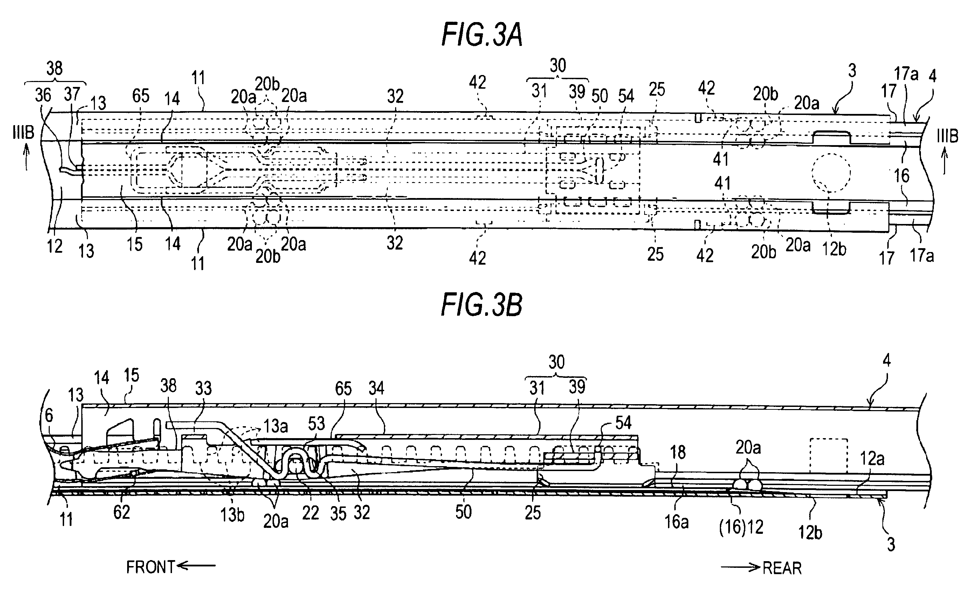

As is shown in Fig. 3A, each first vertical wall portion 11 is provided with a pair of first stoppers 41 at the front end and also at the rear end (Fig. 3A shows only the first stoppers 41 at the rear end). The first stoppers 41 of the first vertical wall portions 11 are disposed symmetrically in the width direction and formed so as to protrude inward oppositely to each other in the width direction.

Also, as is shown in Fig. 3B, in an intermediate portion in the longitudinal direction of each flange 13 of the lower rail 3, a plurality of notches 13a are formed upward from the tip end (lower end) at regular intervals in the longitudinal direction and a locking claw 13b in the shape of a rectangular tooth is formed between every pair of the adjacent notches 13a. Hence, the plurality of locking claws 13b are aligned side by side at the regular intervals in the longitudinal direction of the lower rail 3.

As is shown in Fig. 2, the upper rail 4 is formed of a plate material and has a pair of second vertical wall portions 14 extending in the top-bottom direction between the flanges 13 of the lower rail 3 and a lid wall portion 15 as a second connection wall portion connecting base ends (upper ends) of the second vertical wall portions 14 away from the lower rail 3. A pair of outward extending wall portions 16 are continuously formed from the tip ends (lower ends) of the second vertical wall portions 14 in proximity to the bottom wall portion 12 so as to project outward apart from each other in the width direction while coming closer to the bottom wall portion 12 in the top-bottom direction. Also, a pair of extending wall portions 17 extending in the top-bottom direction so as to be surrounded by the first vertical wall portions 11 and the flanges 13 are continuously formed from the tip ends (outer ends 16b in the width direction) of the outward extending wall portions 16.

In other words, the lower rail 3 and the upper rail 4 have U-shaped rail cross sections butted against each other on the opening side and are prevented from falling off in the top-bottom direction chiefly by engagement between the flanges 13 and the extending wall portions 17. A rail cross section formed by the lower rail 3 and the upper rail 4 is of so-called a rectangular box shape. The lower rail 3 defines a space S in cooperation with the upper rail 4.

The inner portion of each outward extending wall portion 16 in the width direction forms a second lower ball guide 16a as a second ball guide having substantially an arc-shaped cross section protruding outward and diagonally upward. The second lower ball guides 16a are located on the outer side in the width direction than the first lower ball guides 18a. More specifically, the first lower ball guides 18a are formed in the bottom wall portion 12 substantially directly below the second vertical wall portions 14 so as to protrude to come closer to the second vertical wall portions 14 in the top-bottom direction. On the other hand, a second upper ball guide 17a having substantially an arc-shaped cross section protruding inward and diagonally downward is formed in an upper-end region (tip-end region) of each extending wall portion 17.

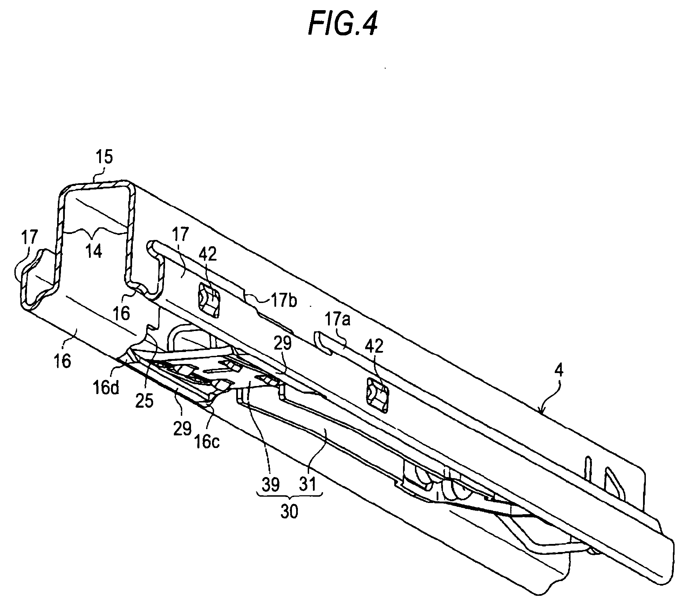

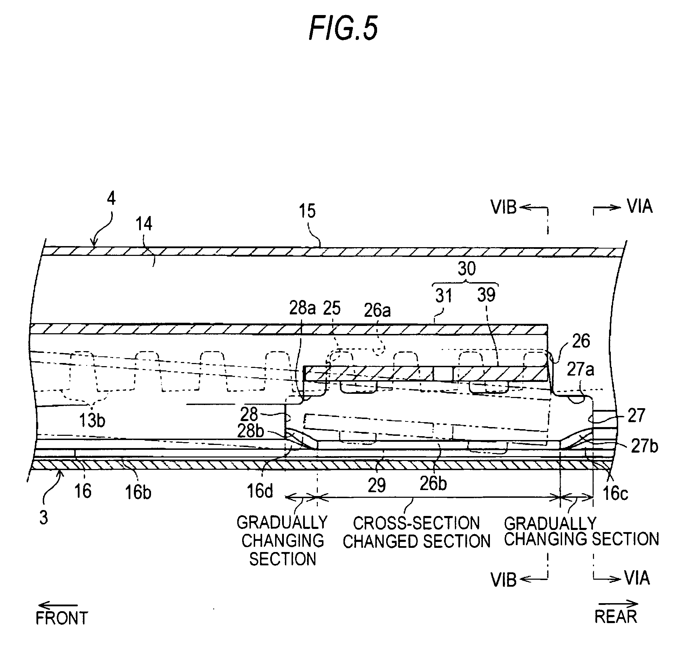

As are shown in Figs. 3An and 3B and Fig. 4, the upper rail 4 is provided with through-holes 25 penetrating the respective second vertical wall portions 14 in the width direction and penetrating the respective outward extending wall portions 16 in the top-bottom direction in a center portion in the longitudinal direction sandwiched between both second stoppers 42 in the front-rear direction. More specifically, a part (inner part in the width direction) of the second lower ball guide 16a is notched by the through-hole 25. As is shown in a larger scale in Fig. 5, each through-hole 25 forms an intermediate opening 26 in an intermediate portion in the front-rear direction and also forms a rear-end opening 27 and a front-end opening 28 penetrating, respectively, a rear-end lower part and a front-end lower part of the intermediate opening 26. Upper ends 26a, 27a, and 28a of the intermediate opening 26, the rear-end opening 27, and the front-end opening 28, respectively, extend substantially horizontally in the front-rear direction. The upper ends 27a and 28a of the rear-end opening 27 and the front-end opening 28, respectively, are flush with each other and located below the upper end 26a of the intermediate opening 26 in the top-bottom direction. That is, an opening width of the rear-end opening 27 and the front-end opening 28 in the top-bottom direction is reduced to the lower side with respect to an opening width of the intermediate opening 26 in the top-bottom direction.

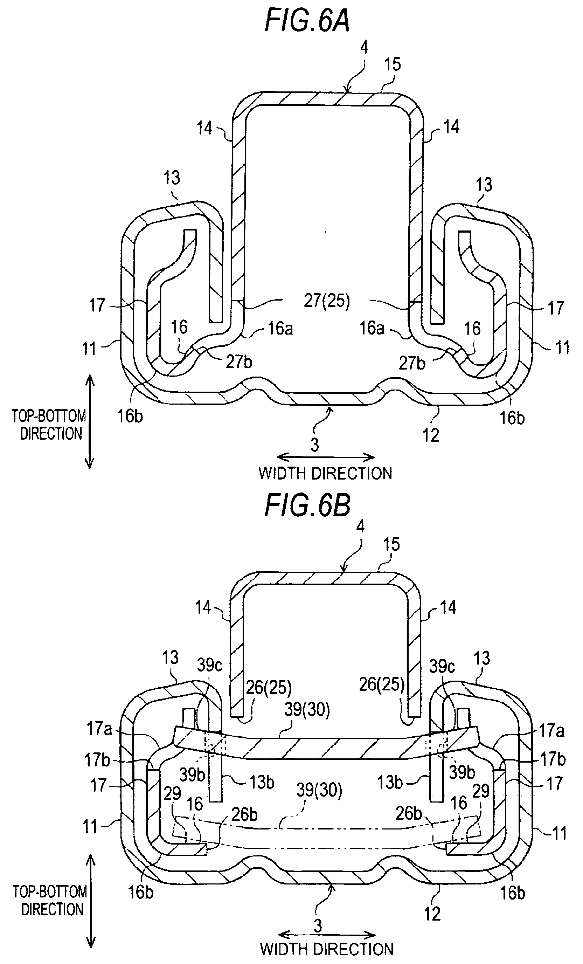

Also, as is shown in Fig. 6A, the rear end of the rear-end opening 27 conforms to the sectional shape of the outward extending wall portions 16. Hence, a region between the outer end 16b of the outward extending wall portion 16 and the outer end 27b of the rear-end opening 27 in the width direction projects inward while coming closer to the lid wall portion 15 in the top-bottom direction. More specifically, the outer end 27b of the rear-end opening 27 rises above the outer end 16b of the outward extending wall portion 16 at the rear end of the rear-end opening 27. The same applies to the front end of the front-end opening 28 (the illustration is omitted here).

On the other hand, as is shown in Fig. 6B, a region in the width direction between the outer end 16b of the outward extending wall portion 16 and the outer end 26b of the intermediate opening 26 extends horizontally and forms a flat portion 29. More specifically, substantially across the entire intermediate opening 26 in the front-rear direction, the flat portion 29 positions the outer end 26b of the intermediate opening 26 to be flush in the top-bottom direction with the outer end 16b of the outward extending wall portion 16 that comes in closest proximity to the bottom wall portion 12 (moves farthest away from the lid wall portion 15) in the top-bottom direction.

As is shown in Fig. 5, substantially in the range of the rear-end opening 27 in the front-rear direction, a region in the width direction between the outer end 16b of the outward extending wall portion 16 and the outer end 27b of the rear-end opening 27 forms a gradually changing portion 16c that gradually conforms a sectional shape of the outward extending wall portion 16 at the rear end of the rear-end opening 27 to a sectional shape in the flat portion 29. Likewise, substantially in the range of the front-end opening 28 in the front-rear direction, a region in the width direction between the outer end 16b of the outward extending wall portion 16 and the outer end 28b of the front-end opening 28 forms a gradually changing portion 16d that gradually conforms a sectional shape of the outward extending wall portion 16 at the front end of the front-end opening 28 to the sectional shape in the flat portion 29. The gradually changing portions 16c and 16d change the sectional shapes of the outward extending wall portion 16 (upper rail 4) at the rear end of the rear-end opening 27 and the front end of the front-end opening 28 into the sectional shape of the outward extending wall portion 16 having the flat portion 29 without generating excess large stress.

That is to say, a range of the outward extending wall portion 16 in the front-rear direction in the through-hole 25 is divided to a cross-section changed section in which the flat portion 29 is disposed and a pair of gradual changing sections in which the gradually changing portions 16c and 16d are disposed. A range of the cross-section changed section in the front-rear direction as a whole is set slightly more rearward than the range of the intermediate opening 26 in the front-rear direction.

As is shown in Fig. 6B, a notch 17b of substantially a rectangular shape is formed in an upper-end region (the second upper ball guides 17a) of each extending wall portion 17 of the upper rail 4 at a position corresponding to the through-hole 25 in the longitudinal direction. Each notch 17b opens upward and penetrates the upper end region in the width direction.

Also, as is shown in Fig. 3A, each extending wall portion 17 is provided with a pair of second stoppers 42 sandwiching the through-hole 25 in front and behind. The second stoppers 42 of the extending wall portions 17 are located symmetrically in the width direction and formed apart from each other by protruding outward in the width direction. The second stoppers 42 provided to each extending wall portion 17 are sandwiched between a pair of the first stoppers 41 disposed apart from each other in the front-rear direction.

Each second stopper 42 is disposed so as to block a movement trajectory of the first stopper 41 in the front-rear direction. Hence, a forward movement of the upper rail 4 with respect to the lower rail 3 is locked as the first stoppers 41 in the front-end portion of the lower rail 3 and the second stoppers 42 in the center portion closer to the front end of the upper rail 4 abut on each other. Contrarily, a backward movement of the upper rail 4 with respect to the lower rail 3 is locked as the first stoppers 41 in the rear-end portion of the lower rail 3 and the second stoppers 42 in the center portion closer to the rear end of the upper rail 4 abut on each other. Owing to this configuration, a relative movable range (slide stroke) of the lower rail 3 and the upper rail 4 is limited.

As is shown in Fig. 2, a lower ball 20a as a spherical ball is interposed in a space between each second lower ball guide 16a and the opposing first lower ball guide 18a. Likewise, an upper ball 20b is interposed in a space between each second upper ball guide 17a and the opposing first upper ball guide 13c. As is shown in Fig. 3A, two lower balls 20a are provided so as to sandwich each through-hole 25 in front and behind, that is, eight lower balls 20a are provided in the right and left in total. Likewise, two upper balls 20b are provided so as to sandwich each through-hole 25 in front and behind, that is, eight upper balls 20b are provided in the right and left in total. The upper rail 4 is supported on the lower rail 3 and allowed to slide in the longitudinal direction (front-rear direction) in such a manner that the respective balls 20a and 20b roll in the spaces between the upper rail 4 and the lower rail 3.

When the lower rail 3 and the upper rail 4 move in the front-rear direction, the lower balls 20a and the upper balls 20b also move in the same direction. On the other hand, the first lower ball guides 18a (ridges 18) are not formed at the front end and the rear end of the lower rail 3. Also, the second ball guides 16a are absent in the range of the through-holes 25 in the front-rear direction. The second upper ball guides 17a are absent in the range of the notches 17b in the front-rear direction. Within the relative movable range of the lower rail 3 and the upper rail 4 limited by the engagement of the first and second stoppers 41 and 42, it is set in such a manner that the lower balls 20a and the upper balls 20b are prevented from moving into this ranges.

As is shown in Fig. 3B, end portions of a column-shaped supporting shaft 22, a center line of which extends in the width direction in front of the through-holes 25, are firmly fixed to and supported on the respective second vertical wall portions 14. A lock lever 30 is connected in the upper rail 4 on the inner side of the second vertical wall portions 14 in the width direction in a rotationally movable manner by the supporting shaft 22. More specifically, the lock lever 30 includes a handle portion 31 formed of a plate material extending in the front-rear direction. The handle portion 31 is provided so as to stand in such a manner that a pair of vertical wall portions 32 extending in the longitudinal direction are aligned side by side in the width direction. A distance in the width direction between the vertical wall portions 32 is set to be shorter than a distance in the width direction between the second vertical wall portions 14 of the upper rail 4. Upper-end edges of the vertical wall portions 32 are connected in the width direction by a connection wall 33 at the respective front ends. Also, the upper-end edges are connected in the width direction by a top board portion 34 at the respective rear ends.

Long holes 35 extending in the front-rear direction at positions as high as the supporting shaft 22 are provided to the respective vertical wall portions 32. An opening width in a short direction (top-bottom direction) of the long hole 35 is set to be equal to the diameter of the supporting shaft 22. The supporting shaft 22 is inserted into the long holes 35 while the vertical wall portions 32 of the handle portion 31 are sandwiched in the width direction between the second vertical wall portions 14 of the upper rail 4. Owing to this configuration, the handle portion 31 is connected to the upper rail 4 in a rotationally movable manner in the top-bottom direction while being allowed to move in the front-rear direction within the range of the long holes 35.

The handle portion 31 has a pair of insertion shape portions 36 and 37 extending forward from the front ends of the respective vertical wall portions 32. The insertion shape portions 36 and 37 are reduced to the lower side below the front ends of the vertical wall portions 32 and come closer oppositely to each other in the width direction so that the one overlaps the other to form a handle insertion portion 38.

Also, the lock lever 30 includes a lock plate 39 as a flat plate portion formed of a plate material and firmly fixed to a lower part in the rear-end portion of the handle portion 31. The lock plate 39 expands in the front-rear direction and the width direction so as to pass through the through-holes 25 (intermediate openings 26) and the notches 17b in the width direction. As is shown in Fig. 6B, the lock plate 39 is provided with locking holes 39b as locking portions that open in the top-bottom direction oppositely to the respective flanges 13. A plurality of (three) locking holes 39b are provided side by side in the front-rear direction at the regular intervals and located at positions at which the locking holes 39b can fit onto the plurality of (three) locking claws 13b provided to the lower rail 3 adjacently in the longitudinal direction.

As is indicated by a solid line in Fig. 6B, the corresponding locking claws 13b can be fit into the respective locking holes 39b when the lock lever 30 rotationally moves about the supporting shaft 22 to raise the lock plate 39. When the corresponding locking claws 13b are fit into the respective locking holes 39b, a relative movement of the lower rail 3 and the upper rail 4 is locked. On the other hand, as is indicated by an alternate long and two short dashes line in Fig. 6B, it is set in such a manner that the respective locking holes 39b come off the corresponding locking claws 13b when the lock lever 30 rotationally moves about the supporting shaft 22 to lower the lock plate 39. In this instance, the locking of a relative movement of the lower rail 3 and the upper rail 4 is unlocked.

A dimension of the lock plate 39 in the width direction is set to be greater than a distance in the width direction between the second upper ball guides 17a of the upper rail 4 and to be less than a distance in the width direction between the extending wall portions 17 located below the second upper ball guides 17a. Hence, although the lock plate 39 passes through the through-holes 25 in the width direction while a relative movement of the lower rail 3 and the upper rail 4 is locked, the lock plate 39 does not interfere with the extending wall portions 17 while the locking of the relative movement is unlocked.

Also, a dimension of the lock plate 39 in the width direction is set to be greater than a distance in the width direction between the outer ends 26b of the intermediate openings 26 (through-holes 25). Hence, a rotational movement of the lock lever 30 to a side where the locking of a relative movement is unlocked is limited to the extent that the rear end of the lock plate 39 abuts on the outer ends 26b of the intermediate openings 26. Nevertheless, basically in the forming range of the intermediate openings 26 (through-holes 25), the flat portion 29 positions the outer ends 26b of the intermediate openings 26 to be flush in the top-bottom direction with the outer ends 16b of the outward extending wall portions 16 that come in closest proximity to the bottom wall portion 12 in the top-bottom direction. Hence, a rotationally movable range (stroke) of the lock lever 30 is increased comparably, for example, as the outer ends 26b of the intermediate openings 26 are lowered below the rear end of the outer end 27b of the rear-end opening 27.

In particular, the edge portions of the lock plate 39 in the width direction form inclined portions 39c directed upward toward the outer side in the width direction. The outer ends 26b of the respective intermediate openings 26 oppose these inclined portions 39c in the top-bottom direction. Hence, the rotationally movable range of the lock lever 30 is increased further comparably as the lock plate 39 comes down along the inclined portions 39c on the inner side in the width direction than the abutment position at which the rear end of the lock plate 39 (both inclined portions 39c) abuts on the outer ends 26b. Fig. 6B obviously shows that while the rear end of the lock plate 39 (both inclined portions 39c) abuts on the outer ends 26b, the center portion in the width direction sandwiched between the outer ends 26b is positioned below the outer ends 26b.

As are shown in Figs. 3A and 3B, a lock spring 50 formed of a single linear material is disposed in the upper rail 4. The lock spring 50 is formed substantially in the shape of a capital U that opens frontward when viewed in a plane. The lock spring 50 has a wedge portion 53 formed by bending an intermediate portion in the longitudinal direction upward and also has a lever locking end portion 54 formed by bending the rear-end portion upward. The lock spring 50 is supported on the upper rail 4 as the supporting shaft 22 is inserted and pinched in the wedge portion 53 from above the supporting shaft 22 and the lever locking end portion 54 is inserted into and fixed to the lock plate 39 from below the lock plate 39.

In this instance, the lock spring 50 biases the lock lever 30 to rotate to a side where the lock plate 39 lifts up in the lever locking end portion 54, that is, to a side where the corresponding locking claws 13b are fit in the respective locking holes 39b. Also, the lock spring 50 locks a movement of the supporting shaft 22 in the front-rear direction within the long holes 35 by biasing the supporting shaft 22 downward, that is, in a direction crossing the longitudinal direction of the long holes 35, in the wedge portion 53 using a reactive force. In short, the position of the supporting shaft 22 in the front-rear direction within the long holes 35 is maintained as the supporting shaft 22 is biased by the wedge portion 53 of the lock spring 50.

The unlocking handle 6 is shaped by bending a tubular material and connected to the lock lever 30 as the unlocking handle 6 is inserted into the upper rail 4 from the front-end opening end of the upper rail 4 and the handle insertion portion 38 is inserted therein. Hence, the unlocking handle 6 basically rotates integrally with the lock lever 30 about the supporting shaft 22. A slit-like supporting groove 62 extending in the width direction is formed in a lower part of the unlocking handle 6 where the handle insertion portion 38 is inserted.

A handle spring 65 formed of a single linear material is disposed in the upper rail 4. The handle spring 65 is formed substantially in the shape of a capital U opening rearward when viewed in a plane. The front-end portion of the handle spring 65 is fit into the supporting groove 62 of the unlocking handle 6 in which the handle insertion portion 38 is inserted and the rear-end portion abuts on the lower surface of the top plate portion 34 of the lock lever 30 (handle portion 31) in a more rear part of the vehicle than the supporting shaft 22. The unlocking handle 6 is biased to rise by the handle spring 65 in the supporting groove 62.

A posture of the unlocking handle 6 is controlled as the front-end portion of the handle insertion portion 38 inserted therein is supported swingably in the top-bottom direction in front of the supporting groove 62 (that is, a position at which the unlocking handle 6 is biased by the handle spring 65) and the unlocking handle 6 is biased upward by the handle spring 65 in the supporting groove 62.

When the front end of the unlocking handle 6 lifts up, the lock lever 30 together with the unlocking handle 6 rotationally moves about the supporting shaft 22 against a biasing force of the lock spring 50 to a side where the lock plate 39 comes down, that is, to a side where the respective locking holes 39b come off the corresponding locking claws 13b.

Assume that the unlocking handle 6 is released from an operation force. In this instance, a relative movement of the lower rail 3 and the upper rail 4 is locked in the same manner as described above as the lock lever 30 together with the unlocking handle 6 rotationally moves about the supporting shaft 22 due to a biasing force of the lock spring 50 to a side where the lock plate 39 rises, that is, to a side where the respective locking holes 39b fit onto the corresponding locking claws 13b. A position in the front-rear direction of the seat 5 supported on the upper rails 4 is thus held.

Assume that the unlocking handle 6 is operated later so that the front end lifts up. In this instance, the locking of a relative movement of the lower rail 3 and the upper rail 4 is unlocked in the same manner as described above as the lock lever 30 together with the unlocking handle 6 rotationally moves about the supporting shaft 22 against a biasing force of the lock spring 50 to a side where the lock plate 39 comes down, that is, to a side where the respective locking holes 39b come off the corresponding locking claws 13b. It thus becomes possible to adjust a position in the front-rear direction of the seat 5 supported on the upper rails 4.

A function of the embodiment disclosed here will now be described.

The lower rail 3 is fixed to the vehicle floor 2 with the fastening bolt 21 in the attaching portion 12a of the bottom wall portion 12. On the other hand, the upper rail 4 is connected to the lower rail 3 in a relatively movable manner so that the lower balls 20a roll in the spaces between the first lower ball guides 18a and the second lower ball guides 16a. Because the second lower ball guides 16a of the upper rail 4 are formed in the inner portions of the outward extending wall portions 16 in the width direction, a clearance in the top-bottom direction between the upper rail 4 and the bottom wall portion 12 increases toward the center in the width direction particularly at the position of the attaching portion 12a in which the first lower ball guides 18a (ridges 18) are not formed. Hence, with the use of this increasing clearance in the top-bottom direction, it becomes possible to dispose the fastening bolt 21 (head portion 21 b) to the attaching portion 12a without the need of seat extrusion in the bottom wall portion 12.

As has been described in detail above, the following advantages can be obtained by the embodiment disclosed here.
(1) In the embodiment disclosed here, the fastening bolt 21 (head portion 21b) can be disposed to the attaching portion 12a without the need of seat extrusion in the bottom wall portion 12. It thus becomes possible to reduce a sectional shape of the lower rails 3, and hence a sectional shape of the entire apparatus in the top-bottom direction.
(2) A relative movement of the lower rail 3 and the upper rail 4 is selectively locked as the locking holes 39b fit onto or come off the locking claws 13b in association with a rotational movement of the lock lever 30 in the top-bottom direction. The rotational movement of the lock lever 30 to a side where the locking of a relative movement is unlocked is limited to the extent that the lock plate 39 abuts on the outer ends 26b of the intermediate openings 26 (through-holes 25) in the outward extending wall portions 16.
   On the outside of the forming range of the through-holes 25 in the direction of the relative movement, the respective outward extending wall portions 16 project outward in the width direction while coming closer to the bottom wall portion 12 in the top-bottom direction. Owing to this configuration, by merely shifting the outer ends (26b) of the intermediate openings 26 in the width direction outward in the width direction, the rotationally movable range (stroke) of the lock lever 30 increases comparably without having to form the flat portion 29 in the forming range of the through-holes 25.
   In the embodiment disclosed here, in the forming range of the intermediate openings 26 (through-holes 25) in the direction of a relative movement, the flat portion 29 positions the outer ends 26b of the intermediate openings 26 to be flush in the top-bottom direction with the outer ends 16b of the outward extending wall portions 16 that come in closest proximity to the bottom wall portion 12 in the top-bottom direction. Hence, the rotationally movable range of the lock lever 30 can be increased without having to unnecessarily shift the outer ends 26b of the intermediate openings 26 (through-holes 25) outward in the width direction. It thus becomes possible to further suppress deterioration of strength of the upper rail 4 caused by the through-holes 25 while suitably securing the rotationally movable range of the lock lever 30.
(3) In the embodiment disclosed here, each outward extending wall portion 16 is provided with the gradually changing portions 16c and 16d, respectively, at the rear end and the front end of the flat portion 29. Different sectional shapes are gradually conformed to each other at the rear end and the front end of the flat portion 29 by the gradually changing portions 16c and 16d, respectively. It thus becomes possible to suppress the occurrence of excess large stress in the outer extending wall portions 16 (upper rail 4) in association with the formation of the flat portion 29.
(4) In the embodiment disclosed here, the lower balls 20a are interposed between the first lower ball guides 18a disposed substantially directly below the second vertical wall portions 14 of the upper rail 4 and the second lower ball guides 16a disposed on the outer side than the first lower ball guide 18a in the width direction (inner portions of the outward extending wall portions 16 in the width direction). Hence, in a case where the lower rail 3 and the upper rail 4 are compressed in the top-bottom direction, for example, by an impact, the upper rail 4 makes an attempt to undergo deformation so that the lower portions of the second vertical wall portions 14 open in the width direction while being introduced by the lower balls 20a. Such deformation of the upper rail 4 is, however, limited by the first vertical wall portions 11 of the lower rail 3 sandwiching the upper rail 4 in the width direction. It thus becomes possible to suppress deformation of the upper rail 4 when the lower rail 3 and the upper rail 4 are compressed in the top-bottom direction. In addition, a direction of deformation of the upper rail 4 in this instance is not a direction in which the upper rail 4 comes off the lower rail 3. It thus becomes possible to suppress the upper rail 4 from coming off the lower rail 3.
(5) In the embodiment disclosed here, a clearance is set between the connection region of the bottom wall portion 12 and the first vertical wall portion 11 of the lower rail 3 and the connection region of the outward extending wall portion 16 and the outward extending wall portion 17 of the upper rail 4 so that balls are not interposed as in the related art. Hence, for example, by adjusting the clearance by changing the sectional shape of the lower rail 3 or the upper rail 4, it becomes possible to control deformation of the lower rail 3 or the upper rail 4 with ease.
(6) In the embodiment disclosed here, a load in the top-bottom direction is received by the lower balls 20a disposed substantially directly below the second vertical wall portions 14 of the upper rail 4. Owing to this configuration, rigidity in this direction can be enhanced.
(7) In the embodiment disclosed here, a rotational movement of the lock lever 30 to the side for the locking of a relative movement to be unlocked can be limited to the extent that the rear end of the lock plate 39 abuts on the outer ends 26b of the intermediate openings 26. This configuration eliminates the need to separately provide a stopper that limits the rotational movement of the lock lever 30, for example, to the unlocking handle 6 or a peripheral component. Hence, the number of components can be reduced.
(8) In the embodiment disclosed here, the fastening bolt 21 (head portion 21b) is disposed to the attaching portion 12a without the need of seat extrusion in the bottom wall portion 12. Owing to this configuration, a clearance in the top-bottom direction between the lower rail 3 and the upper rail 4 can be reduced. It thus becomes possible to suppress a rotational movement to the side for the lock plate 39 to come down by an impact or the like, that is, to the side for the respective locking holes 39b to come off the corresponding locking claws 13b.
(9) Generally, a belt anchor forming a terminal of the seat belt is attached to either one of a pair of the upper rails 4 on the right and left. Hence, for example, when a large load in the front-rear direction is inputted to the belt anchor in case of a vehicle crash, right-left asymmetrical deformation occurs in the vehicle body, for example, in the vehicle floor 2 and the right and left upper rails 4 may possibly be twisted relatively. In this instance, there is a possibility that the right and left lock levers 30 maintain the posture due to rigidity of the unlocking handles 6 so that the lock levers 30 (lock plate 39) rotationally move relatively in a direction to unlock the locking with the locking claws 13b. In the embodiment disclosed here, however, the fastening bolt 21 (head portion 21b) is disposed to the attaching portion 12a without providing a seat portion in the bottom wall portion 12. It thus becomes possible to reduce a clearance in the top-bottom direction between the bottom wall portion 12 of the lower rail 3 and the second vertical wall portions 14 of the upper rails 4 and a rotational movement of the lock lever 30 (lock plate 39) in the direction to unlock the locking can be suppressed comparably.

The embodiment disclosed here may be modified as follows.

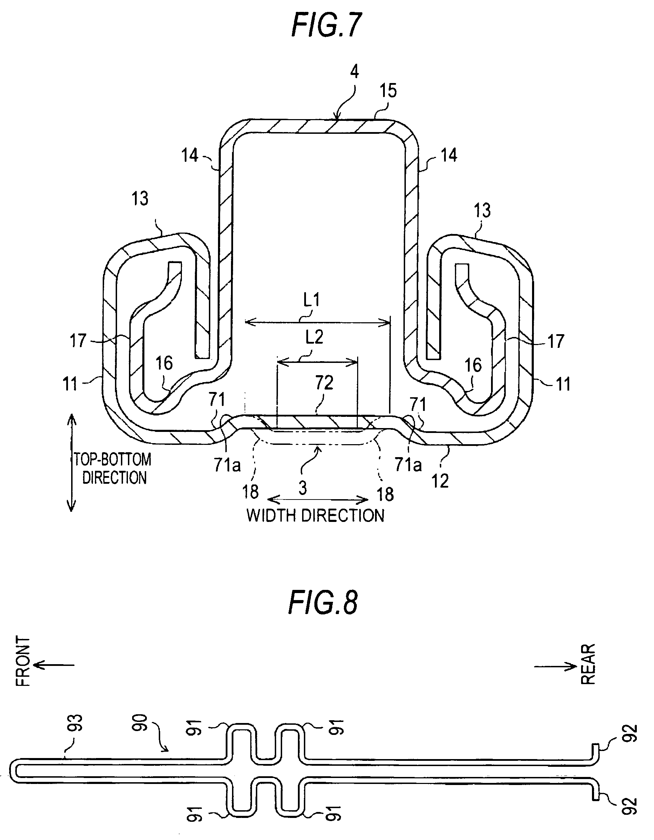

As is shown in Fig. 7, the lower rail 3 may have a flat plate wall portion 72 that connects apex portions 71a of a pair of first lower ball guides 71 equivalent to the first lower ball guides 18a in closest proximity to the second vertical wall portions 14 in the top-bottom direction. In this case, a substantially horizontal planar shape in the bottom wall portion 12 has a distance L1 in the width direction between the inner ends (apex portions 71a) of the first lower ball guides 71. On the other hand, in a case where the first lower ball guides 18a are formed by the ridges 18, a substantially horizontal planar shape in the bottom wall portion 12 has a distance L2 in the width direction, which is less than the distance L1, between the inner ends of the ridges 18. In short, a substantially horizontal planar shape that makes the full use of the distance (L1) in the width direction between the first lower ball guides 71 can be secured by the flat plate wall portion 72. It thus becomes possible to suitably secure an installation position in the lower rail 3 (bottom wall portion 12) at which an appropriate functional component or an attachment member thereof is installed.

More specifically, in a configuration including so-called a walk-in mechanism, it becomes possible to suitably secure an installment position for a memory component that stores a seat position before the walk-in mechanism operates.

Alternatively, in a case where the embodiment disclosed here is applied to so-called a power seat for which the lower rails 3 and the upper rails 4 are moved relatively by electrical power, power is transmitted from the former to the latter and vice versa by threading nuts provided to one of the lower rails 3 and the upper rails 4 onto screws provided to the other. Hence, in such a case, it becomes possible to suitably secure installation positions (bracket fastening seating surfaces or the like) of the nuts or the screws. In addition, a position in the top-bottom direction of the threaded portion (the center of the screws) of the nuts and the screws can be brought closer to the lower rails 3 or the upper rails 4 by an amount comparable to a raised height of the flat plate wall portion 72. Strength can be therefore increased.

Torque rods that make the nuts or the screws provided to a pair of the right and left upper rails 4 operate in association are passed through the second vertical wall portions 14 using step portions in the top-bottom direction between the flanges 13 of the respective lower rails 3 and the lid wall portions 15 of the respective upper rails 4. In the embodiment disclosed here, the outward extending wall portions 17 and the first vertical wall portions 11 are not increased in the top-bottom direction for the purpose of securing the rotationally movable range of the lock lever 30. Accordingly, a distance in the top-bottom direction of the step portions is secured suitably. It thus becomes possible to dispose the torque rods, for example, without having to increase the sectional shape of the upper rails 4 in the top-bottom direction.

A lock lever 90 formed of a single linear material functioning as the locking member and also as the biasing member as is shown in Fig. 8 may be used instead. More specifically, the lock lever 90 is formed substantially in the shape of a capital U opening rearward when viewed in a plane. The lock lever 90 has locking portions 91 of substantially a rectangular shape protruding outward to the both sides in the width direction in a center portion in the longitudinal direction. The locking portions 91 disposed on each side in the width direction are aligned side by side in pairs at a regular interval in the front-rear direction.

Also, both terminals of the lock lever 90 extending rearward are bent outward to the both sides in the width direction and form a pair of right and left hinge pins 92. The lock lever 90 is disposed between the second vertical wall portions 14 and the hinge pins 92 are inserted therein in a rotationally movable manner. The lock lever 90 is thus connected to the upper rail 4 in a rotationally movable manner in the top-bottom direction.

On the other hand, the lock lever 90 forms a handle insertion portion 93 in a closed region extending forward from the locking portions 91. The lock lever 90 basically rotates integrally with the unlocking handle (6) as the handle insertion portion 93 is inserted into the unlocking handle.

When configured in this manner, the lock lever 90 is biased to rotationally move to a side where the corresponding locking claws 13b fit into the respective locking portions 91 with its own biasing force while the unlocking handle free from an operation force holds a predetermined posture. In this instance, a relative movement of the lower rail 3 and the upper rail 4 is locked.

On the other hand, when the unlocking handle is operated, the lock lever 90 is rotationally moved to a side where the corresponding locking claws 13b come off the respective locking portions 91 while undergoing elastic deformation. In this instance, the locking of a relative movement of the lower rail 3 and the upper rail 4 is unlocked.

Modifications as follows can particularly reduce the number of components.

In the embodiment disclosed here, the flat portions 29 in the forming range of the through-holes 25 (intermediate openings 26) may be omitted. Even in this case, each outward extending wall portion 16 projects outward in the width direction while coming closer to the bottom wall portion 12 in the top-bottom direction. Hence, for example, even when the entire lock plate 39 cannot pass through the through-holes 25 in the top-bottom direction, the rotationally movable range (stroke) of the lock lever 30 can be gradually increased comparably by shifting the outer ends 26b of the through-holes 25 (intermediate openings 26) outward in the width direction. It thus becomes possible to suppress deterioration of strength of the upper rail 4 caused by the through-holes 25 while suitably securing the rotationally movable range of the lock lever 30.

In the embodiment disclosed here, when the flat portions 29 can be shaped by the through-holes 25 without any interruption from the normal outward extending wall portions 16 having no flat portions 29, at least one of the gradually changing portions 16c and 16d may be omitted.

In the embodiment disclosed here, the lower rails 3 may be fastened to the vehicle floor 2 using, for example, caulking pins as fastening members. Alternatively, the lower rails 3 may be fastened to the vehicle floor 2 via appropriate brackets.

In the embodiment disclosed here, the ridge 18 (first lower ball guide 18a) may include a plurality of ridges 18 disposed to the bottom wall portion 12 at intervals in the longitudinal direction as long as a movable range of the lower balls 20a is included.

In the embodiment disclosed here, the lock plate 39 may be a flat lock plate from which the inclined portions 39c are omitted.

In the embodiment disclosed here, a lock lever may be formed of a single plate material in which the handle portion and the lock plate are formed integrally.

In the embodiment disclosed here, the locational relation of the upper rail 4 and the lock lever 30 with respect to the supporting shaft 22 and the long holes 35 may be reversed.

In the embodiment disclosed here, it may be configured in such a manner that circular holes are provided to the lock lever 30 (handle portion 31) instead of the long holes 35, so that the lock lever 30 is connected to the upper rail 4 in a rotationally movable manner by inserting the supporting shaft 22 into the circular holes. The locational relation of the upper rail 4 and the lock lever 30 with respect to the supporting shaft 22 and the circular holes may be reversed.

In the embodiment disclosed here, the lower rail 3 may be a structure formed of a plurality of plate materials connected by welding or the like.

In the embodiment disclosed here, the upper rail 4 may be a structure formed of a plurality of plate materials connected by welding or the like.

In the embodiment disclosed here, appropriate sliding members or rollers may be adopted instead of the upper balls 20b. Alternatively, the upper balls 20b and the supporting structure thereof may be omitted.

In the embodiment disclosed here, the stationary relation of the lower rails 3 and the upper rails 4 with respect to the vehicle floor 2 and the seat 5 (that is, the locational relation as to which rail is fixed above the other) may be reversed. In this case, an operation to unlock the lock lever 30 provided to the vehicle floor 2 may be performed, for example, from an appropriate operation member via a cable.

In the embodiment disclosed here, one lower rail 3 and one upper rail 4 may be disposed with respect to one seat 5, or three or more lower rails 3 and three or more upper rails 4 may be disposed with respect to one seat 5.

In the embodiment disclosed here, a relative movement direction of the lower rail and the upper rail may be, for example, a direction of the vehicle width.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed. Accordingly, it is expressly intended that all such variations, changes and equivalents which fall within the scope of the present invention as defined in the claims, be embraced thereby.

## Claims

1. A vehicle seat sliding apparatus, comprising:
a first rail (3) adapted to be fixed to one of a vehicle floor (2) and a seat (5) and having a pair of first vertical wall portions (11, 11) aligned side by side in a width direction, a first connection wall portion (12) connecting base ends of the first vertical wall portions, and a pair of flanges (13, 13) projecting from tip ends of the first vertical wall portions (11, 11) inwardly in the width direction in which the flanges (13, 13) face each other and further bending toward the base ends of the first vertical wall portions (11, 11);
a second rail (4) adapted to be fixed to the other one of the vehicle floor and the seat in a relatively movable manner with respect to the first rail (3) and having a pair of second vertical wall portions (14, 14) aligned side by side in the width direction between the flanges (13, 13), a second connection wall portion (15) connecting base ends of the second vertical wall portions (14, 14), a pair of outward extending wall portions (16, 16) projecting outward apart from each other in the width direction from tip ends of the second vertical wall portions (14, 14) while coming closer to the first connection wall portion (12) in a top-bottom direction, and a pair of extending wall portions (17, 17) extending in the top-bottom direction from tip ends of the outward extending wall portions (16, 16) so as to be surrounded by the first vertical wall portions (11, 11) and the flanges (13, 13);
**characterized in that** it further comprises:
a pair of balls (20a, 20a) interposed in a rollable manner between a pair of second ball guides (16a, 16a) provided to the outward extending wall portions (16, 16) in inner portions in the width direction and a pair of first ball guides (18a, 18a) provided to the first connection wall portion (12) so as to protrude to come closer to the second vertical wall portions (14, 14) in the top-bottom direction and on inner sides than the second ball guides (16a, 16a) in the width direction; and
an attaching portion (12a) disposed at a tip end of the first connection wall portion (12) in a direction of a relative movement where the first ball guides (18a, 18a) are not formed and forming a seating surface of a fastening member (21) that is adapted to fix the first rail (3) to one of the vehicle floor (2) and the seat (5).

2. The vehicle seat sliding apparatus according to claim 1, wherein:
the first rail (3) includes a flat plate wall portion (72) connecting, in the width direction, apex portions of the first ball guides (18a, 18a) that come in closest proximity to the second vertical wall portions (14, 14) in the top-bottom direction.

3. The vehicle seat sliding apparatus according to claim 1 or 2, wherein:
a plurality of locking claws (13b) are aligned side by side in the direction of the relative movement at tip ends of the flanges (13, 13) of the first rail (3);
the second rail (4) is provided with a pair of through-holes (25) penetrating the second vertical wall portions (14, 14) in the width direction and penetrating the outward extending wall portions (16, 16) in the top-bottom direction; and
the vehicle seat sliding apparatus further comprises
a locking member (90) connected to the second rail (4) in a rotationally movable manner about an axial line (22) extending in the width direction on an inner side of the second vertical wall portions (14, 14) in the width direction, formed in an insertable manner into the through-holes (25) in the second vertical wall portions (14, 14), having locking portions (91, 91) capable of locking at least a part of the locking claws (13b) in both side edge portions in the width direction, and selectively locking the relative movement of the first and second rails (3, 4) as the locking portions (91, 91) fit onto and come off the locking claws (13b) in association with a rotational movement in the top-bottom direction, and
a biasing member (50) biasing and rotating the locking member (90) to a side where the relative movement is locked.

4. The vehicle seat sliding apparatus according to claim 3, wherein:
the outward extending wall portions (16, 16) are provided with a pair of flat portions (29, 29) making a region between outer ends in the width direction and the through-holes (25) horizontally in the width direction in a forming range of the through-holes (25) in the direction of the relative movement.

5. The vehicle seat sliding apparatus according to claim 4, wherein:
the outward extending wall portions (16, 16) are provided with a gradually changing portion (16c) that gradually conforms different sectional shapes to each other at least on one side of the flat portion (29, 29) in the direction of the relative movement.

## Patentansprüche

1. Fahrzeugsitzschiebevorrichtung, umfassend:
eine erste Schiene (3), die dazu ausgelegt ist, an einem Fahrzeugboden (2) oder an einem Sitz (5) befestigt zu sein, und die ein Paar erster vertikaler Wandabschnitte (11, 11), die in einer Breitenrichtung nebeneinander angeordnet sind, einen ersten Verbindungswandabschnitt (12), der die unteren Enden der ersten vertikalen Wandabschnitte verbindet, und ein Paar Flansche (13, 13), die von Spitzenenden der ersten vertikalen Wandabschnitte (11, 11) in der Breitenrichtung, in der die Flansche einander zugewandt sind, nach innen überstehen und sich ferner in Richtung der unteren Enden der ersten vertikalen Wandabschnitte (11, 11) neigen, aufweist,
eine zweite Schiene (4), die dazu ausgelegt ist, an dem anderen des Fahrzeugbodens und des Sitzes in Bezug auf die erste Schiene (3) relativ beweglich befestigt zu sein, und die ein Paar zweiter vertikaler Wandabschnitte (14, 14), die in der Breitenrichtung zwischen den Flanschen (13, 13) nebeneinander angeordnet sind, einen zweiten Verbindungswandabschnitt (15), der die unteren Enden der zweiten vertikalen Wandabschnitte (14, 14) verbindet, ein Paar sich nach außen erstreckender Wandabschnitte (16, 16), die sich von Spitzenenden der zweiten vertikalen Wandabschnitte (14, 14) in der Breitenrichtung nach außen überstehend voneinander entfernen, während sie sich dem ersten Verbindungswandabschnitt (12) in einer Oben-Unten-Richtung annähern, und ein Paar sich erstreckender Wandabschnitte (17, 17) aufweist, die sich in der Oben-Unten-Richtung von Spitzenenden der sich nach außen erstreckenden Wandabschnitte (16, 16) erstrecken, dergestalt, dass sie von den ersten vertikalen Wandabschnitten (11, 11) und den Flanschen (13, 13) umgeben sind,
**dadurch gekennzeichnet, dass** sie ferner umfasst:
ein Paar Kugeln (20a, 20a), die rollbar zwischen einem Paar zweiter Kugelführungen (16a, 16a), mit denen die sich nach außen erstreckenden Wandabschnitte (16, 16) an in der Breitenrichtung inneren Abschnitten versehen sind, und einem Paar erster Kugelführungen (18a, 18a), mit denen der erste Verbindungswandabschnitt (12) versehen ist, angeordnet sind, dergestalt, dass sie überstehen, um in der Oben-Unten-Richtung und auf Innenseiten näher an die zweiten vertikalen Wandabschnitten (14, 14) heranzureichen als die zweiten Kugelführungen (16a, 16a) in der Breitenrichtung, und
einen Anbringungsabschnitt (12a), der in einer Richtung einer relativen Bewegung, wo die ersten Kugelführungen (18a, 18a) nicht ausgebildet sind, an einem Spitzenende des ersten Verbindungswandabschnitts (12) angeordnet ist und eine Auflageoberfläche eines Befestigungselements (21) bildet, welches dazu ausgelegt ist, die erste Schiene (3) an dem Fahrzeugboden (2) oder an dem Sitz (5) zu befestigen.

2. Fahrzeugsitzschiebevorrichtung nach Anspruch 1, wobei:
die erste Schiene (3) einen flachen Plattenwandabschnitt (72) aufweist, der Spitzenabschnitte der ersten Kugelführungen (18a, 18a) in der Breitenrichtung verbindet, welche in der Oben-Unten-Richtung in unmittelbare Nähe der zweiten vertikalen Wandabschnitte (14, 14) kommen.

3. Fahrzeugsitzschiebevorrichtung nach Anspruch 1 oder 2, wobei:
mehrere Verriegelungsklauen (13b) in der Breitenrichtung nebeneinander an den Spitzenenden der Flansche (13, 13) der ersten Schiene (3) in Richtung der relativen Bewegung ausgerichtet sind,
die zweite Schiene (4) mit einem Paar Durchgangsöffnungen (25) versehen ist, welche die zweiten vertikalen Wandabschnitte (14, 14) in der Breitenrichtung durchdringen und die sich nach außen erstreckenden Wandabschnitte (16, 16) in der Oben-Unten-Richtung durchdringen, und
die Fahrzeugsitzschiebevorrichtung ferner umfasst:
ein Arretierungselement (90), das drehbar beweglich um eine Axiallinie (22), die in der Breitenrichtung auf einer Innenseite der zweiten vertikalen Wandabschnitte (14, 14) verläuft, mit der zweiten Schiene (4) verbunden ist, in die Durchgangsöffnungen (25) in den zweiten vertikalen Wandabschnitten (14, 14) einsetzbar ausgebildet ist, Arretierungsabschnitte (91, 91) aufweist, die in der Lage sind, wenigstens einen Teil der Verriegelungsklauen (13b) in beiden Seitenkantenabschnitten in der Breitenrichtung zu arretieren und wahlweise die relative Bewegung der ersten und zweiten Schiene (3, 4) zu arretieren, indem die Arretierungsabschnitte (91, 91) in Verbindung mit einer Drehbewegung in der Oben-Unten-Richtun auf die Verriegelungsklauen (13b) aufgesetzt und von ihnen gelöst werden, und
ein Neigungselement (50), das das Arretierungselement (90) zu einer Seite, auf der die relative Bewegung arretiert wird, neigt und es rotiert.

4. Fahrzeugsitzschiebevorrichtung nach Anspruch 3, wobei:
die sich nach außen erstreckenden Wandabschnitte (16, 16) mit einem Paar flacher Abschnitte (29, 29) versehen sind, welche in einem Ausbildungsbereich der Durchgangsöffnungen (25) in der Richtung der relativen Bewegung einen Raum zwischen äußeren Enden in der Breitenrichtung und den Durchgangsöffnungen (25) horizontal in der Breitenrichtung schaffen.

5. Fahrzeugsitzschiebevorrichtung nach Anspruch 4, wobei:
die sich nach außen erstreckenden Wandabschnitte (16, 16) mit einem sich graduell ändernden Abschnitt (16c) versehen ist, welcher wenigstens auf einer Seite des flachen Abschnitts (29, 29) in Richtung der relativen Bewegung verschiedene Querschnitte graduell aneinander angleicht.

## Revendications

1. Appareil de coulissement de siège de véhicule, comportant :
un premier rail (3) prévu pour être fixé sur l'un d'un plancher de véhicule (2) et d'un siège (5) et ayant une paire de premières parties de paroi verticale (11, 11) alignées côte à côte dans le sens de la largeur, une première partie de paroi de raccordement (12) reliant des extrémités de base des premières parties de paroi verticale (11, 11), et une paire de rebords (13, 13) dépassant depuis des extrémités de bout des premières parties de paroi verticale (11, 11) vers l'intérieur dans le sens de la largeur dans laquelle les rebords (13, 13) se font face et se plient en outre vers les extrémités de base des premières parties de paroi verticale (11, 11) ; et
un deuxième rail (4) prévu pour être fixé sur l'autre du plancher de véhicule et du siège d'une manière mobile relative par rapport au premier rail (3) et ayant une paire de deuxièmes parties de paroi verticale (14, 14) alignées côte à côte dans le sens de la largeur entre les rebords (13, 13), une deuxième partie de paroi de raccordement (15) reliant des extrémités de base des deuxièmes parties de paroi verticale (14, 14), une paire de parties de paroi s'étendant vers l'extérieur (16, 16) qui dépassent vers l'extérieur à l'écart l'une de l'autre dans le sens de la largeur depuis des extrémités de bout des deuxièmes parties de paroi verticale (14, 14) tout en se rapprochant de la première partie de paroi de raccordement (12) dans une direction haut-bas, et une paire de parties de paroi d'extension (17, 17) s'étendant dans la direction haut-bas depuis des extrémités de bout des parties de paroi s'étendant vers l'extérieur (16, 16) de façon à être entourées par les premières parties de paroi verticale (11, 11) et les rebords (13, 13),
**caractérisé en ce qu'**il comporte en outre :
une paire de billes (20a, 20a) interposée d'une manière pouvant rouler entre une paire de deuxièmes guides de bille (16a, 16a) prévus sur les parties de paroi s'étendant vers l'extérieur (16, 16) dans des parties intérieures dans le sens de la largeur et une paire de premiers guides de bille (18a, 18a) prévus sur la première partie de paroi de raccordement (12) de façon à dépasser pour venir plus près des deuxièmes parties de paroi verticale (14, 14) dans la direction haut-bas et sur des côtés intérieurs que les deuxièmes guides de bille (16a, 16a) dans le sens de la largeur ; et
une partie de fixation (12a) disposée au niveau d'une extrémité de bout de la première partie de paroi de raccordement (12) dans une direction d'un mouvement relatif où les premiers guides de bille (18a, 18a) ne sont pas formés et formant une surface d'appui d'un élément de fixation (21) qui est prévu pour fixer le premier rail (3) sur l'un du plancher de véhicule (2) et du siège (5).

2. Appareil de coulissement de siège de véhicule selon la revendication 1, dans lequel :
le premier rail (3) comprend une partie de paroi de plaque plate (72) reliant, dans le sens de la largeur, des parties de sommet des premiers guides de bille (18a, 18a) qui viennent à proximité immédiate des deuxièmes parties de paroi verticale (14, 14) dans la direction haut-bas.

3. Appareil de coulissement de siège de véhicule selon la revendication 1 ou 2, dans lequel :
une pluralité de griffes de blocage (13b) est alignée côte à côte dans la direction du mouvement relatif au niveau des extrémités de bout des rebords (13, 13) du premier rail (3) ;
le deuxième rail (4) est pourvu d'une paire de trous débouchants (25) pénétrant dans les deuxièmes parties de paroi verticale (14, 14) dans le sens de la largeur et pénétrant dans les parties de paroi s'étendant vers l'extérieur (16, 16) dans la direction haut-bas ; et
l'appareil de glissière de siège de véhicule comporte en outre
un élément de blocage (90) relié au deuxième rail (4) d'une manière mobile en rotation autour d'une ligne axiale (22) s'étendant dans le sens de la largeur sur un côté intérieur des deuxièmes parties de paroi verticale (14, 14) dans le sens de la largeur, formé d'une manière pouvant être insérée dans les trous débouchants (25) dans les deuxièmes parties de paroi verticale (14, 14), ayant des parties de blocage (91) capables de bloquer au moins une partie des griffes de blocage (13b) dans les deux parties de bord latéral dans le sens de la largeur, et de bloquer de manière sélective le mouvement relatif des premier et deuxième rails (3, 4) lorsque les parties de blocage (91) s'ajustent sur et se dégagent des griffes de blocage (13b) en association avec un mouvement de rotation dans la direction haut-bas, et
un élément de rappel (50) qui rappelle et fait tourner l'élément de blocage (90) jusqu'à un côté où le mouvement relatif est bloqué.

4. Appareil de coulissement de siège de véhicule selon la revendication 3, dans lequel :
les parties de paroi s'étendant vers l'extérieur (16, 16) sont pourvues d'une paire de parties plates (29, 29) rendant une zone entre des extrémités extérieures dans le sens de la largeur et les trous débouchants (25) horizontale dans le sens de la largeur dans une plage de formation des trous débouchants (25) dans la direction du mouvement relatif.

5. Appareil de coulissement de siège de véhicule selon la revendication 4, dans lequel :
les parties de paroi s'étendant vers l'extérieur (16, 16) sont pourvues d'une partie changeant progressivement (16c) qui se conforme progressivement à des formes en coupe différentes l'une de l'autre au moins sur un côté de la partie plate (29, 29) dans la direction du mouvement relatif.
